# FASCICULE DE BREVET EUROPEEN

(11) **EP 1 374 708 B1**
(45) Date de publication et mention de la délivrance du brevet: **24.08.2005**
(21) Numéro de dépôt: 03013383.9
(22) Date de dépôt: 18.06.2003
(51) Int. Cl.: A43C 11/14, A43C 7/04, A43C 7/08, F16G 11/10

(54) **Dispositif de frein pour lacet**
Bremseinrichtung für Schnürsenkel
Braking system for a lace

(30) Priorité: 26.06.2002 CH 11172002
(43) Date de publication de la demande: 02.01.2004
(73) Titulaire: LANGE INTERNATIONAL S.A., 1700 Fribourg (CH)
(72) Inventeur: Frare, Gabriele, 31040 Venegazzu (TV) (IT); Sartor, Paolo, 31044 Montebeluna (TV) (IT)
(74) Mandataire: Meylan, Robert Maurice

(56) Documents cités:
- US-A- 4 465 011
- US-A- 5 361 461
- US-B1- 6 339 867

## Description

La présente invention a trait au domaine des chaussures et, en particulier, au domaine des chaussures de sport. Elle concerne un dispositif de frein d'un lacet de chaussure coulissant dans une embase liée à la chaussure, comprenant un levier articulé sur l'embase, rappelé par un moyen élastique dans une position de contact avec le lacet interdisant le coulissement du lacet dans un sens par arc-boutement.

Les sports de glisse impliquent des contraintes contradictoires concernant la structure des chaussures. D'une part, elles doivent présenter des éléments rigides permettant à l'utilisateur de guider de manière précise l'engin de glisse et de ressentir la réponse de l'engin à ses sollicitations. D'autre part, elles doivent présenter des éléments souples assurant le confort en répartissant de la manière la plus homogène possible la pression de contact autour des pieds de l'utilisateur.

De la demande EP 1 066 767, on connaît une chaussure présentant une coque rigide comprenant une semelle et sur laquelle est articulé un collier rigide. La coque présente une échancrure sur le dessus du pied jusqu'au-dessus du cou-de-pied. Des éléments semi-rigides sont fixés de part et d'autre de cette échancrure et se recouvrent sur le dessus du pied de manière à assurer une étanchéité. Ces éléments sont réalisés par exemple en cuir ou en matériau synthétique. La fermeture et le serrage de cette chaussure se fait grâce à des dispositifs à levier, tirant et boucle coopérant avec des crochets. De tels dispositifs, lorsqu'ils sont fixés sur des éléments souples créent des zones de compression sur les pieds des utilisateurs.

Pour remédier à ce problème, on peut utiliser comme dans la demande WO 96/03186, un laçage. La chaussure de surf à neige décrite dans ce document présente une coque rigide réalisée en une seule pièce entourant le bas de la jambe et le talon de l'utilisateur mais présentant une ouverture sur le dessus du pied et des parties souples couvrant cette ouverture. Les parties souples comportent des oeillets dans lequel coulisse un lacet qui, lorsqu'on le tend, permet de fermer et de serrer la chaussure par rapprochement des parties souples.

Cependant, une fermeture et un serrage de chaussure par un lacet sont dans le cas de chaussures de sports d'hiver peu pratique. En effet, après avoir tendu le lacet, on utilise de manière classique un noeud pour maintenir cette tension assurant la fermeture de la chaussure. Une telle opération peut être particulièrement fastidieuse avec des gants de sports d'hiver.

Du brevet US 1,242,774, on connaît un dispositif de frein pour lacet permettant de résoudre ce problème. Ce document décrit un dispositif comprenant une tôle présentant un trou lui permettant d'être liée de manière rigide à la tige d'une chaussure et présentant un guidage dans lequel peut glisser un lacet. A l'une des extrémités de ce guidage un levier en forme de fourchette est articulé autour d'un axe orthogonal au guidage. Ce levier est rappelé dans une position de contact avec l'extrémité du guidage par un ressort de manière à réduire sensiblement la section de passage du lacet à cette extrémité du guidage. De cette façon, lorsque le levier est en contact avec l'extrémité du guidage, la section de passage du lacet est inférieure à la section du lacet. Ainsi, lorsqu'on tire le lacet dans le sens provoquant le serrage de la chaussure, celui-ci glisse librement dans le guidage et lorsqu'on tire sur le lacet dans le sens contraire, il y a arc-boutement du levier et blocage du lacet.

Ce dispositif de frein présente un inconvénient majeur. Lorsqu'on veut enlever une chaussure présentant un tel moyen de frein du lacet, il faut agir en permanence sur le levier pour permettre le déplacement du lacet permettant l'ouverture de la chaussure. Cette manipulation, normalement peu commode, est rendue difficile par l'utilisation de gants de sports d'hiver. De plus, lorsque la chaussure est en vente, en particulier dans une grande surface, le client ne connaissant pas la chaussure et voulant l'essayer risque de ne pas pouvoir l'enfiler parce que le lacet est trop serré et de se diriger alors vers un autre produit.

Une autre solution est décrite dans le document US6339867, qui se compose d'un corps creux et d'une pièce de coincement mobile en translation dans l'entonnoir du corps creux, et soumise à l'action d'un moyen élastique qui la pousse en permanence, une butée dans le carter limitant ce mouvement. Le corps creux est mobile dans un carter et peut occuper deux positions à l'aide d'une butée escamotable. On passe à la position stable de déblocage par simple action du moyen de manoeuvre qui entraîne en rotation une butée escamotable comprenant un doigt d'arrêt. Dans cette position de déblocage, le lacet est libre de se déplacer dans le sens du desserrage. Une traction sur le lacet dans le sens du serrage provoque le retour à la position stable de blocage grâce aux moyens de frottement. Cette solution est toutefois très complexe.

Le but de l'invention est de réaliser un dispositif de frein de lacet permettant de pallier cet inconvénient. En particulier, l'invention se propose de réaliser un dispositif de frein permettant le glissement du lacet dans les deux sens après une manipulation préliminaire pouvant être effectuée sans difficulté avec des gants de sports d'hiver.

Le dispositif de frein de lacet selon l'invention est caractérisé en ce que le levier présente des moyens de maintien lui permettant de conserver une deuxième position stable autorisant le coulissement du lacet dans les deux sens. Plus précisément, l'embase (1) comprend un téton ou un logement coopérant respectivement avec un logement ou au moins un téton sur le levier ou l'embase comprend au moins un cran coopérant avec au moins un cran lié au levier.

Le dispositif comprend, de préférence, un moyen de déclenchement du rappel du levier dans sa position interdisant le coulissement du lacet dans un sens lorsqu'on exerce un effort de traction défini, dans une direction définie sur l'extrémité libre du lacet.

Le moyen de déclenchement du rappel du levier comprend une boucle articulée sur le levier et à l'intérieur de laquelle coulisse le lacet.

De manière préférée, la partie du levier destinée à venir en contact avec le lacet présente des dents permettant d'augmenter le coefficient de frottement entre le levier et le lacet.

Selon des variantes de réalisation du dispositif, le moyen élastique de rappel du levier dans sa position de contact avec le lacet est un ressort de compression ou un ressort de torsion monté autour de l'axe d'articulation du levier sur l'embase.

Un dispositif de fermeture de chaussure du type à levier, tirant et boucle peut être fixé sur l'embase.

Dans ce cas, le dispositif de fermeture peut être monté coulissant sur l'embase et, lors de sa mise sous tension, peut entraîner le levier dans sa position interdisant le coulissement du lacet dans un sens.

Des crochets destinés à coopérer avec un dispositif de fermeture du type à levier, tirant et boucle pour fermer la chaussure peuvent être présents sur l'embase.

Des moyens peuvent permettre, lorsqu'on manipule le levier d'un dispositif de serrage pour ouvrir la chaussure, d'amener le levier dans sa position stable autorisant le coulissement du lacet dans les deux sens.

Le dessin annexé représente, à titre d'exemples, deux modes d'exécution du dispositif de frein selon l'invention.
La figure 1 est une vue en perspective d'une chaussure de ski munie d'un dispositif de frein selon l'invention.
La figure 2 est une vue de détail d'un dispositif de frein en position « freiné » selon un premier mode de réalisation.
La figure 3 est une vue en coupe selon III-III d'un dispositif de frein en position « freiné » selon un premier mode de réalisation.
La figure 4 est une vue de détail d'un dispositif de frein en position « libre » selon un premier mode de réalisation.
La figure 5 est une vue en coupe selon V-V d'un dispositif de frein en position « libre » selon un premier mode de réalisation.
La figure 6 est une vue de détail d'un dispositif de frein en position « freiné » selon un deuxième mode de réalisation.
La figure 7 est une vue en coupe selon VII-VII d'un dispositif de frein en position « freiné » selon un deuxième mode de réalisation.
La figure 8 est une vue de détail d'un dispositif de frein en position « libre » selon un deuxième mode de réalisation.
La figure 9 est une vue en coupe selon IX-IX d'un dispositif de frein en position « libre » selon un deuxième mode de réalisation.

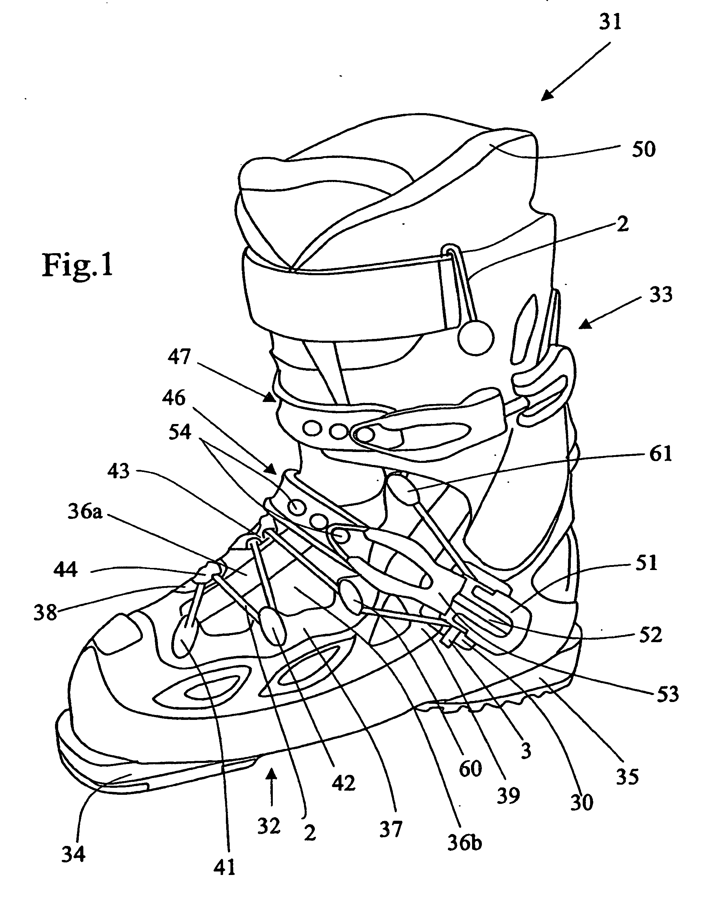

La chaussure de ski 31, représentée à la figure 1, comprend une coque 32 rigide réalisée par exemple en polyuréthane injecté, un collier 33 réalisé lui aussi en un matériau rigide et articulé sur la coque dans la région malléolaire. La chaussure 31 reçoit un chausson de confort 50. La coque 32 comprend une semelle dont les extrémités avant 34 et arrière 35 sont conformées pour permettre de lier la chaussure à une planche de glisse (non représentée) par l'intermédiaire de fixations (non représentées).

La coque 32 présente une ouverture située au niveau du dessus du pied et s'étendant jusqu'au-dessus du cou-de-pied. Cette ouverture est fermée par deux rabats 36a et 36b réalisés en matière souple et liés à la coque 32 de part et d'autre de l'ouverture. Le rabat 36a recouvre le rabat 36b de manière à assurer l'étanchéité de la chaussure 31. La chaussure 31 comprend encore des éléments semi-rigides 37 et 38 eux aussi liés à la coque 32 de part et d'autre de l'ouverture. Les rabats souples 36a et 36b, les éléments semi-rigides 37 et 38 et la coque 32 sont liés entre eux par un joint 39 réalisé grâce à un procédé de sur-injection.

La chaussure présente des moyens 46 et 47 de fermeture et de serrage du type à levier, tirant et boucle coopérant avec des crochets (représentés schématiquement). Pour compléter ces moyens de serrage, la chaussure 31 est pourvu sur le dessus du pied d'un lacet 2 coulissant dans les passants 41, 42, 43, 44, 60 et 61 des éléments semi-rigides 37 et 38. Ce lacet 2 est fixé à l'extrémité avant de la chaussure sur la coque 32. Lorsqu'on tend le lacet en exerçant un effort de traction sur l'extrémité libre du lacet, on rapproche l'un de l'autre les deux éléments 37 et 38 par action du lacet 2 sur ceux-ci et on provoque le serrage de la chaussure 31 autour du pied de l'utilisateur.

Le dispositif de serrage comprend un levier 51 lié par des articulations, d'une part à une embase 1, et, d'autre part à un tirant 52 solidaire d'une boucle 53. coopérant avec des crochets 54. Le dispositif présente dans l'embase 1 un dispositif de frein 30 du lacet 2 permettant de maintenir la tension du lacet 2 lorsque la chaussure doit être serrée autour du pied de l'utilisateur et permettant le coulissement du lacet 2 dans les deux sens lorsque l'utilisateur met ou enlève la chaussure.

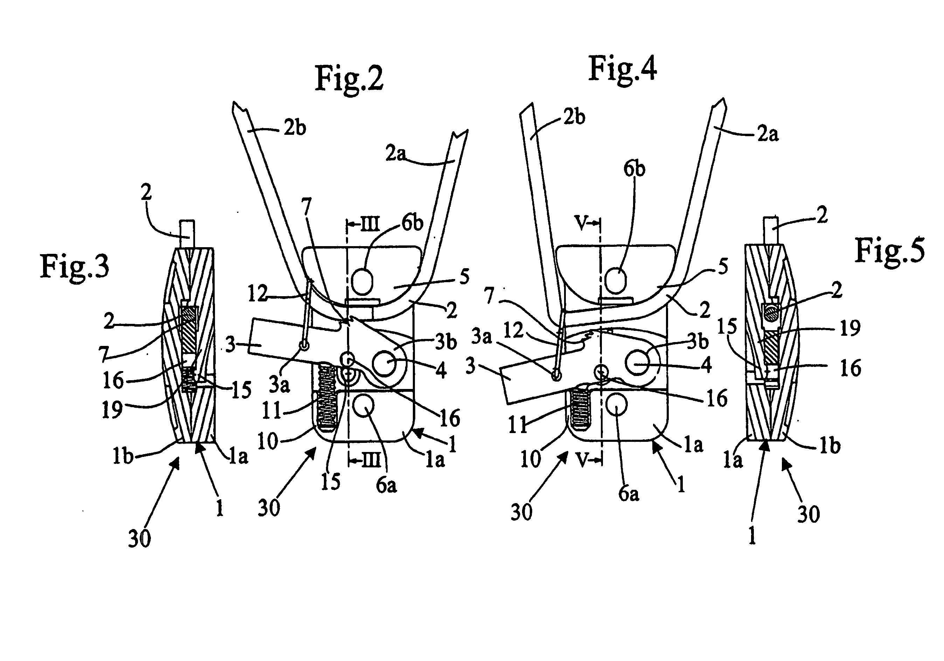

Le dispositif de frein 30 représenté au figures 2 à 5 est constitué principalement d'une embase 1 réalisée en deux parties 1a et 1b, d'un levier 3 articulé sur l'embase 1, d'un guide 5 du lacet 2 et d'une boucle 12 articulée sur le levier 3, située à l'extérieur de l'embase 1 et traversée par le lacet 2.

Les parties 1a et 1b de l'embase 1 sur laquelle est articulée le levier 51 (non représenté sur ces figures) présentent des trous 6a et 6b débouchant leur permettant d'être liées à la chaussure 31 par des rivets. La partie inférieure 1a de l'embase présente un guide 5 du lacet 2 coulissant dans l'embase 1.

Le levier 3 présente à une de ses extrémités un alésage 3b permettant son articulation autour d'un axe 4. L'autre extrémité du levier 3 peut être manipulée par l'utilisateur pour changer sa position. Une zone du levier 3 présente des dents 7 destinées à venir en contact avec le lacet 2. Le levier comprend aussi un trou 3a dans lequel est articulé la boucle 12.

Un ressort de compression 11, logé dans un alésage 10 pratiqué dans l'embase 1, vient en contact avec le levier 3 afin de le rappeler dans une position « freiné » stable, représentée aux figures 2 et 3, dans laquelle les dents 7 sont en contact avec le lacet 2. La partie inférieure de l'embase présente une languette élastique 19 à l'extrémité de laquelle, un téton 15 coopère avec un trou 16 pratiqué dans le levier 3 pour maintenir, par engagement du téton 15 dans le trou 16, le levier 3 dans une position « libre » stable, représentée aux figures 4 et 5 dans laquelle les dents 7 ne sont pas en contact avec le lacet 2. Le couple que crée l'action du ressort 11 sur le levier est inférieure au couple qu'il faut appliquer sur le levier 3 pour que le téton 15 sorte de l'alésage 16.

Lorsque l'utilisateur désire enfiler son pied dans la chaussure, il amène le levier 3 dans la position « libre » dans laquelle celui-ci n'est pas en contact avec le lacet 2. L'utilisateur peut alors introduire son pied dans la chaussure en relâchant la tension du lacet 2. Une fois son pied introduit, il tire sur l'extrémité libre 2b du lacet pour tendre le lacet 2 et serrer la chaussure autour de son pied. Cet effort sur l'extrémité libre 2b amène le levier 3 dans sa position « freiné » par l'intermédiaire de la boucle 12. Dès lors, le lacet 2 ne peut coulisser dans l'embase que dans le seul sens provoquant une augmentation de la tension du brin 2a dont l'extrémité est liée à la coque 32 de la chaussure 31.

En effet, si on exerce une tension sur le lacet 2 ayant tendance à le faire coulisser dans l'autre sens, le lacet 2 exerce sur le levier 3 un effort créant un couple autour de l'axe 4 ayant tendance à appliquer le levier 3 contre le lacet 2. Le blocage du lacet dans ce sens est réalisé par arc-boutement.

Lorsque l'utilisateur veut enlever sa chaussure, il lui suffit de manipuler le levier 3 pour l'amener dans sa position « libre ». Il peut alors faire coulisser le lacet 2 à l'intérieur de l'embase 1 dans n'importe quel sens et par conséquent détendre le brin 2a du lacet 2 de manière à pouvoir extraire son pied de la chaussure 31.

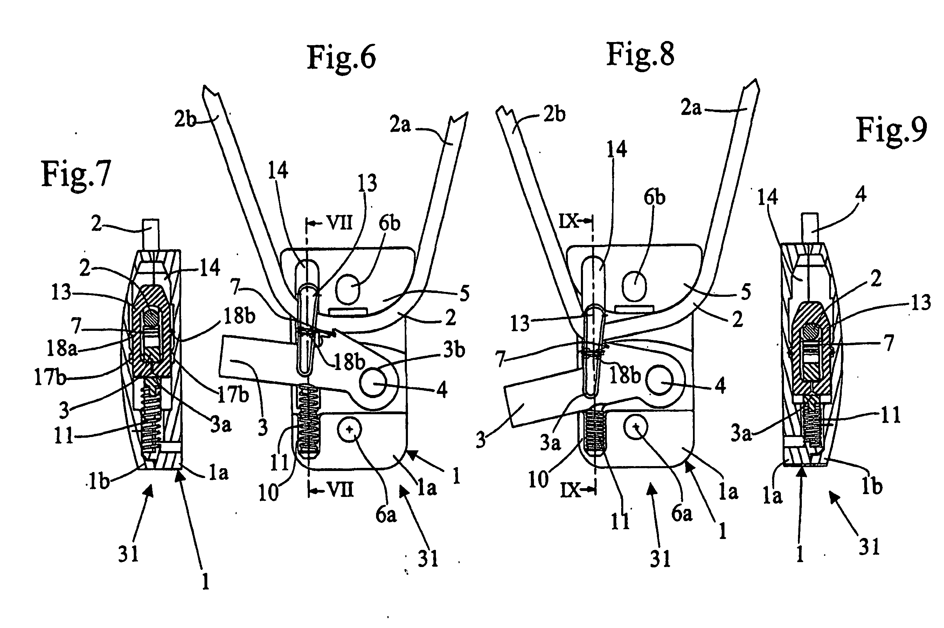

Un deuxième mode de réalisation du dispositif de frein est représenté aux figures 6 et7 en position « freiné » et aux figures 8 et 9 en position « libre ». Il diffère du dispositif précédemment décrit en ce qu'il présente une boucle 13, permettant d'amener le levier 3 en position « freiné », se trouvant à l'intérieur de l'embase composée des parties la et 1b. Cette boucle 13 est guidée dans une rainure 14 réalisée dans l'embase. Elle présente deux tétons 18a et 18b destinés à coopérer avec deux crans 17a et 17b pour maintenir le levier 3 dans sa position « libre ». Le passage de la position « libre » à la position « freiné » et inversement se fait par déformation des parties 1a et 1b de l'embase et de la boucle 13.

Une variante non représentée des modes de réalisations du dispositif selon l'invention présente un ressort de torsion remplaçant le ressort 11 des dispositifs décrits.

L'extrémité du brin libre 2b du lacet 2 présente de manière avantageuse un élément tel qu'une languette ou une boule permettant de faciliter sa préhension et l'application d'un effort de traction.

Dans une variante non représentée du dispositif de frein, la chaussure présente des moyens permettant, lorsqu'on manipule le levier 51 d'un des dispositifs de fermeture et de serrage pour ouvrir la chaussure, d'amener le levier 3 dans sa position « libre ». Ces moyens sont connus de l'état de la technique et en particulier du brevet CH 682 879. Ils peuvent, par exemple, consister en un câble lié à l'un des leviers 51 des dispositifs de serrage et agissant sur le levier 3 du dispositif de frein.

La chaussure peut encore présenter des moyens permettant, lorsqu'on manipule le levier 51 d'un des dispositifs de fermeture et de serrage pour fermer la chaussure, d'amener le levier 3 dans sa position « freiné ». Ces moyens peuvent, par exemple, comprendre un dispositif de fermeture monté coulissant sur l'embase présentant le dispositif de frein. Le déplacement du dispositif de fermeture lors du serrage de la chaussure est alors utilisé pour amener le levier 3 dans sa position « freiné ».

L'invention peut bien entendu être appliquée à d'autres chaussures que les chaussures de ski et peut être appliquée, en particulier, aux chaussures de surf à neige.

## Revendications

1. Dispositif de frein (30 ;31) d'un lacet (2) de chaussure (31) coulissant dans une embase (1) liée à la chaussure (31), comprenant un levier (3) articulé sur l'embase (1), rappelé par un moyen élastique (11) dans une position de contact avec le lacet (2) interdisant le coulissement du lacet (2) dans un sens par arc-boutement, **caractérisé en ce que** l'embase (1) comprend un téton (15) ou un logement (16) coopérant respectivement avec un logement (16) ou au moins un téton (15) sur le levier (3) ou **en ce que** l'embase (1) comprend au moins un cran (17a ; 17b) coopérant avec au moins un cran (18a ; 18b) lié au levier (3), permettant au levier (3) de conserver une deuxième position stable autorisant le coulissement du lacet (2) dans les deux sens.

2. Dispositif de frein (30 ; 31) selon la revendication 1, **caractérisé en ce qu'**il comprend un moyen (12 ; 13) de déclenchement du rappel du levier (3) dans sa position interdisant le coulissement du lacet (2) dans un sens lorsqu'on exerce un effort de traction défini, dans une direction définie sur l'extrémité libre (2b) du lacet (2).

3. Dispositif de frein (30 ; 31) selon la revendication 2, **caractérisé en ce que** le moyen (12 ; 13) de déclenchement du rappel du levier (3) comprend une boucle (12 ; 13) articulée sur le levier (3) et à l'intérieur de laquelle coulisse le lacet (2).

4. Dispositif de frein (31) selon la revendication 3, **caractérisé en ce que** l'embase (1) comprend au moins un cran (17a, 17b) coopérant avec au moins un cran (18a, 18b) réalisé sur une boucle (13) liée au levier (3) dans laquelle passe le lacet (2).

5. Dispositif de frein (30 ; 31) selon l'une des revendications précédentes, **caractérisé en ce que** la partie du levier destinée à venir en contact avec le lacet (2) présente des dents (7) permettant d'augmenter le coefficient de frottement entre le levier (3) et le lacet (2).

6. Dispositif de frein (30 ; 31) selon l'une des revendications précédentes, **caractérisé en ce que** le moyen élastique (11) de rappel du levier (3) dans sa position de contact avec le lacet (2) est un ressort de compression (11).

7. Dispositif de frein selon l'une des revendications 1 à 5, **caractérisé en ce que** le moyen élastique de rappel du levier (3) dans sa position de contact avec le lacet (2) est un ressort de torsion monté autour de l'axe (4) d'articulation du levier (3) sur l'embase (1).

8. Dispositif de frein (30 ; 31) selon l'une des revendications précédentes, **caractérisé en ce que** sur l'embase (1) est fixé un dispositif de fermeture de chaussure du type à levier (51), tirant (52) et boucle (53).

9. Dispositif de frein selon la revendication 8, **caractérisé en ce que** le dispositif de fermeture est monté coulissant sur l'embase (1) et **en ce que**, lors de sa mise sous tension, il entraîne le levier (3) dans sa position interdisant le coulissement du lacet (2) dans un sens.

10. Dispositif de frein selon l'une des revendications 1 à 7, **caractérisé en ce que** l'embase présente des crochets destinés à coopérer avec un dispositif de fermeture du type à levier, tirant et boucle pour fermer la chaussure.

11. Dispositif de frein selon l'une des revendications précédentes, **caractérisé en ce que** des moyens permettent, lorsqu'on manipule le levier (51) d'un dispositif de serrage pour ouvrir la chaussure, d'amener le levier (3) dans sa position stable autorisant le coulissement du lacet (2) dans les deux sens.

12. Chaussure comprenant un dispositif de frein selon l'une des revendications 1 à 11.

## Patentansprüche

1. Bremseinrichtung (30; 31) für einen Schnürsenkel (2) eines Schuhs (31), welcher in einer mit dem Schuh (31) verbundenen Grundplatte (1) gleitet, mit einem Hebel (3), der auf der Grundplatte (1) angelenkt ist und durch ein elastisches Mittel (11) in eine mit dem Schnürsenkel (2) in Kontakt befindliche Position zurückgestellt wird, in welcher das Gleiten des Schnürsenkels (2) in einer Richtung durch Verklemmung verhindert wird, **dadurch gekennzeichnet, dass** die Grundplatte (1) einen Ansatz (15) oder eine Öffnung (16) aufweist, der bzw. die mit einer Öffnung (16) bzw. mit wenigstens einem Ansatz (15) am Hebel (3) zusammenarbeitet, oder dass die Grundplatte (1) wenigstens ein Rastelement (17a; 17b) aufweist, welches mit wenigstens einem mit dem Hebel (3) verbundenen Rastelement (18a; 18b) zusammenarbeitet, was es dem Hebel (3) erlaubt, eine zweite stabile Position beizubehalten, welche das Gleiten des Schnürsenkels (2) in beiden Richtungen zulässt.

2. Bremseinrichtung (30; 31) nach Anspruch 1, **dadurch gekennzeichnet, dass** sie ein Mittel (12; 12) aufweist, um den Hebel (3) in seine das Gleiten des Schnürsenkels (2) in eine Richtung verhindernde Position zurückzustellen, wenn- man eine bestimmte Zugkraft in einer bestimmten Richtung auf das freie Ende (2b) des Schnürsenkels (2) ausübt.

3. Bremseinrichtung (30; 31) nach Anspruch 2, **dadurch gekennzeichnet, dass** das Mittel (12; 13) zum Auslösen der Rückstellung des Hebels (3) eine Schnalle (12; 13) aufweist, die am Hebel (3) angelenkt ist und in derem Inneren der Schnürsenkel (2) gleitet.

4. Bremseinrichtung (31) nach Anspruch 3, **dadurch gekennzeichnet, dass** die Grundplatte (1) wenigstens ein Rastelement (17a, 17b) aufweist, welches mit wenigstens einem Rastelement (18a, 18b) an einer mit dem Hebel (3) verbundenen Schnalle (13) zusammenarbeitet, durch welche der Schnürsenkel (2) hindurchläuft.

5. Bremseinrichtung (30; 31) nach einem der vorangehenden Ansprüche, **dadurch gekennzeichnet, dass** derjenige Teil des Hebels, welcher dazu bestimmt ist, mit dem Schnürsenkel (2) in Kontakt zu kommen, Zähne aufweist, welche den Reibungskoeffizienten zwischen Hebel (3) und Schnürsenkel (2) vergrössern.

6. Bremseinrichtung (30; 31) nach einem der vorangehenden Ansprüche, **dadurch gekennzeichnet, dass** das elastische Mittel (11) zur Rückstellung des Hebels (3) in seine mit dem Schnürsenkel (2) in Kontakt befindliche Position eine Druckfeder (11) ist.

7. Bremseinrichtung nach einem der Ansprüche 1 bis 5, **dadurch gekennzeichnet, dass** das elastische Mittel zur Rückstellung des Hebels (3) in seine mit dem Schnürsenkel (2) in Kontakt befindliche Position eine Torsionsfeder ist, welche die den Hebel (3) mit der Grundplatte (1) verbindende Gelenkachse (4) umgibt.

8. Bremseinrichtung (30; 31) nach einem der vorangehenden Ansprüche, **dadurch gekennzeichnet, dass** auf der Grundplatte (1) eine mit Hebel (51), Spannstange (52) und Schnalle (53) arbeitende Vorrichtung zum Schliessen des Schuhs befestigt ist.

9. Bremseinrichtung nach Anspruch 8, **dadurch gekennzeichnet, dass** die Schliessvorrichtung gleitend auf der Grundplatte montiert ist und dass beim Spannen dieser Vorrichtung der Hebel (3) in seine Position gebracht wird, in welcher er das Gleiten des Schnürsenkels in eine Richtung verhindert.

10. Bremseinrichtung nach einem der Ansprüche 1 bis 7, **dadurch gekennzeichnet, dass** die Grundplatte (1) Haken aufweist, die dazu bestimmt sind, mit einer Hebel, Spannstange und Schnalle aufweisenden Schliessvorrichtung zusammenzuarbeiten, um den Schuh zu schliessen.

11. Bremseinrichtung nach einem der vorangehenden Ansprüche, **dadurch gekennzeichnet, dass** es Mittel erlauben, dass, wenn der Hebel (51) einer Spannvorrichtung zum Öffnen des Schuhs betätigt wird, der Hebel (3) in seine stabile Position verstellt wird, welche das Gleiten des Schnürsenkels (2) in beide Richtungen zulässt.

12. Schuh mit einer Bremseinrichtung gemäss einem der Ansprüche 1 bis 11.

## Claims

1. A brake device (30; 31) for a lace (2), of a boot (31), sliding in a base part (1) linked to the boot (31), comprising a lever (3) articulated on the base part (1), returned by an elastic means (11) into a position of contact with the lace (2) preventing the sliding of the lace (2) in one direction by a pressing action, **characterized in that** the base part (1) comprises a stud (15) or a housing (16), interacting respectively with a housing (16) or at least a stud (15) on the lever (3), or **in that** the base part (1) comprises at least a notch (17a, 17b) interacting with at least one notch (18a, 18b) linked to the lever (3), enabling it to maintain a second, stable position allowing the sliding of the lace (2) in both directions.

2. A brake device (30; 31) as claimed in claim 1, **characterized in that** it comprises a means (12; 13) for releasing the return of the lever (3) into its position preventing the sliding of the lace (2) in one direction, by an action consisting of exerting a defined tensile force in a defined direction on the free end (2b) of the lace (2) .

3. A brake device (31) as claimed in claim 2, **characterized in that** the means (12; 13) for triggering the return of the lever (3) comprises a buckle (12; 13) articulated on the lever (3) and inside which the lace (2) slides.

4. A brake device (30; 31) as claimed in claim 3, **characterized in that** base part (1) comprises at least one notch (17a, 17b) interacting with at least one notch (18a, 18b) made on the buckle (13), in which the lace (2) passes.

5. A brake device (30; 31) as claimed in one of previous claims, **characterized in that** the part of the lever for coming into contact with the lace (2) has teeth (7) that make it possible to increase the coefficient of friction between the lever (3) and the lace (2).

6. A brake device (30; 31) as claimed in one of previous claims, **characterized in that** the elastic means (11) for returning the lever (3) into its position of contact with the lace (2) is a compression spring (11).

7. A brake device as claimed in in one of claims 1 to 5, **characterized in that** the elastic means for returning the lever (3) into its position of contact with the lace (2) is a torsion spring mounted around the articulation pin (4) of the lever (3) on the base part (1).

8. A brake device (30; 31) as claimed in one of previous claims, **characterized in that** a boot-closure device of the type with a lever (51), tie (52), and buckle (53) is fixed on the base part (1).

9. A brake device as claimed in claim 8, **characterized in that** the closure device is mounted slideably on the base part (1), and **in that**, when it is placed under tension, it entrains the lever (3) into its position preventing the sliding of the lace (2) in one direction.

10. A brake device as claimed one of claims 1 to 7, **characterized in that** the base part has hooks for interacting with a closure device of the type with a lever, tie and buckle in order to close the boot.

11. A brake device as claimed in one of previous claims, **characterized in that**, when the lever (51) of a tightening device for opening the boot is manipulated, means make it possible to bring the lever (3) into its stable position allowing the sliding of the lace (2) in both directions.

12. Boot comprising a brake device as claimed in one of claims 1 to 11.
